# EUROPÄISCHE PATENTSCHRIFT

(11) **EP 2 693 571 B1**
(45) Veröffentlichungstag und Bekanntmachung des Hinweises auf die Patenterteilung: **10.05.2017**
(21) Anmeldenummer: 13002591.9
(22) Anmeldetag: 16.05.2013
(51) Int. Cl.: H01R 12/59

(54) **Anordnung mit Stromsammelschienen**
Assembly with busbars
Agencement doté de barres omnibus électriques

(30) Priorität: 03.08.2012 DE 102012015215
(43) Veröffentlichungstag der Anmeldung: 05.02.2014
(73) Patentinhaber: Mektec Europe GmbH, 41812 Erkelenz (DE)
(72) Erfinder: Bramesfeld, Wulf, Dr., 42327 Wuppertal (DE); Pohlke, Martin, 13509 Berlin (DE); Zedler, Uwe, 10243 Berlin (DE); Fischer, Peter, 51688 Wipperfuerth (DE)
(74) Vertreter: Wesch, Arno

(56) Entgegenhaltungen:
- EP-A2- 1 253 684
- BE-A- 737 653
- US-A1- 2001 015 347

## Beschreibung

### Technisches Gebiet

Die Erfindung betrifft eine Anordnung gemäß dem Oberbegriff des Patentanspruchs 1.

### Stand der Technik

Aus der US 2001/015 347 A1 ist bereits eine solche Anordnung bekannt. Bei dieser Anordnung wird eine Stromsammelschiene zwischen einem Flachkabel und einer Isolatorplatte angeordnet.

Die EP 1 253 684 A2 zeigt eine Anordnung, bei welcher ein Kabelschuh zwischen zwei Flachkabeln positioniert ist.

Die BE 737 653 zeigt eine Klemme oder einen Kabelschuh, der mit einem armierten Flachkabel verbunden ist.

Aus der DE 31 37 117 A1 ist eine Anordnung bekannt, bei welcher eine Stromsammelschiene mit mindestens einem Anschlußdraht einen Verbund bildet. Zur Herstellung des Verbunds ist eine Klemmschraube vorgesehen.

Die Herstellung der bisher bekannten Anordnungen ist kostenintensiv.

### Darstellung der Erfindung

Der Erfindung liegt daher die Aufgabe zugrunde, Material- und Prozesskosten zu reduzieren.

Die vorliegende Erfindung löst die zuvor genannte Aufgabe durch eine Anordnung mit den Merkmalen des Patentanspruchs 1.

Erfindungsgemäß ist erkannt worden, dass durch eine direkte Anbindung von Schaltungsträgern an Stromsammelschienen nahezu jeder Bereich der Schaltungsträger mit anderen Bauteilen und/ oder Baugruppen verbunden werden kann. Erfindungsgemäß werden Kontaktstellen mechanisch durch einen Folienverbund verstärkt bzw. gegen Belastungen unterstützt. Durch die verbundartige Anordnung, welche durch Ultraschallweißen gefertigt ist, kann nahezu jede Stelle der Schaltungsträger mit einem zu verbindenden Partner direkt elektrisch und/ oder mechanisch platzsparend kontaktiert werden. Hierbei können Kontaktteile eingespart werden. Auf Crimpverbindungen mit Schweißcrimps, welche aufgrund von Platzproblemen häufig nicht einsetzbar sind, wird verzichtet. Überdies werden durch den Verbund die Kontaktstellen mechanisch gefestigt bzw. verstärkt. Dies macht die Kontaktstellen widerstandsfähiger gegen Belastungen. Hierdurch werden zusätzliche Bauteile, insbesondere Kontaktteile, eingespart und Prozesskosten gesenkt.

Die Stromsammelschiene ist zwischen zwei Schaltungsträgern einlaminiert. Hierdurch wird ein besonders fester Verbund erzielt. Eine Anordnung nach Anspruch 1 löst die eingangsgenannte Aufgabe.

Die Leiterbahn könnte mit der Stromsammelschiene ultraschallverschweißt sein. Durch Ultraschallverschweißen können punktuell sehr eng definierte Bereiche erwärmt werden. Hierfür ist die Leiterbahn rückseitig von Folie befreit.

Auf dem flexiblen Schaltungsträger könnte eine Trägerfolie aufliegen. Durch diese konstruktive Maßnahme wird die Anordnung verstärkt.

Der hier beschriebene flexible Schaltungsträger ist vorzugsweise als flaches Element ausgebildet, welches auf mindestens einer Folie oder zwischen zwei Folien Leiterbahnen und/ oder elektrische Schaltungen aufweist.

Es könnte eine Bestückung mit passiven elektronischen Bauteilen vorgesehen sein, welche über Lötstellen mit dem Schaltungsträger kontaktiert sind. Ein Verbund kann passive elektronische Bauteile, wie Sicherungen und Temperatursensoren tragen, welche über Lötstellen mit dem Schaltungsträger kontaktiert werden.

Die hier beschriebene Anordnung ist in mechatronischen Baugruppen für Batterieanwendungen verwendbar. Denkbar sind sämtliche Verwendungen in der Folientechnologie, bei welchen elektrische und/ oder mechanische Kontaktierungen von Folien mit anderen Bauteilen und/ oder Baugruppen durchgeführt werden.

### Kurzbeschreibung der Zeichnung

In der Zeichnung zeigen
- Fig. 1: eine schematische Ansicht einer Anordnung, welche einen Verbund aus einer Sammelschiene und einem flexiblen Schaltungsträger umfasst,
- Fig. 2: eine rückseitige Ansicht der Anordnung gemäß Fig. 1,
- Fig. 3: eine weitere Anordnung mit mehreren Sammelschienen und
- Fig. 4: eine rückseitige Ansicht der Anordnung gemäß Fig. 3, bei welcher der flexible Schaltungsträger zur Verstärkung mit einer Trägerfolie versehen ist.

### Ausführung der Erfindung

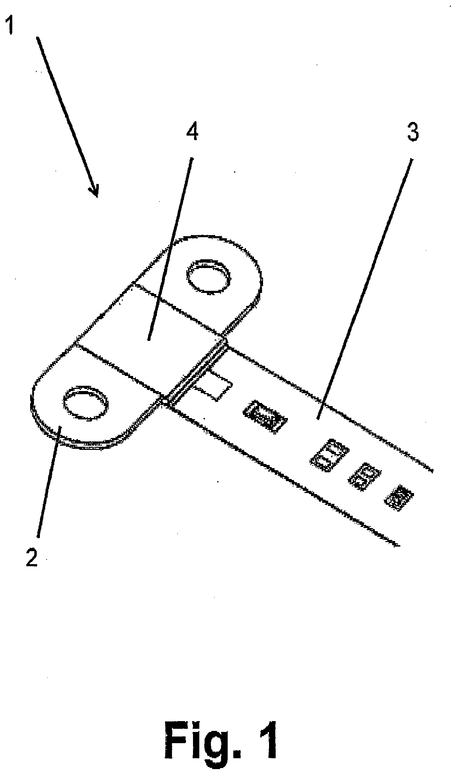

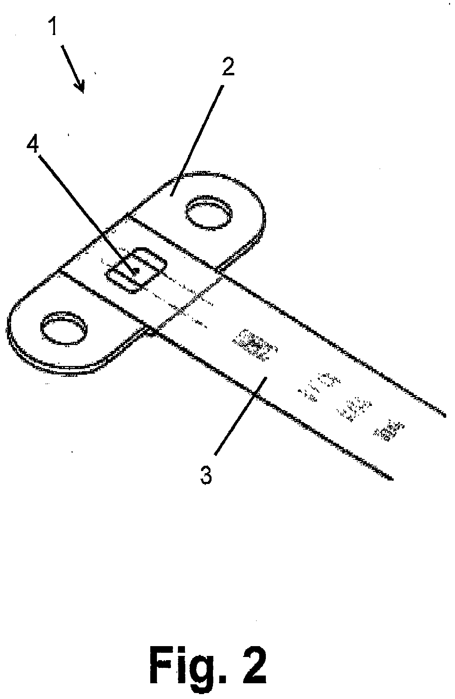

Die Fig. 1 und 2 zeigen eine Anordnung 1, umfassend mindestens eine Stromsammelschiene 2, welche mit mindestens einem flexiblen Schaltungsträger 3 einen Verbund bildet, wobei der flexible Schaltungsträger 3 mindestens eine Leiterbahn 4 aufweist.

Die Leiterbahn 4 ist mit der Stromsammeischiene 2 verschweißt. Die Leiterbahn 4 ist mit der Stromsammelschiene 2 ultraschallverschweißt.

Die Stromsammelschiene 2 ist aus Metall gefertigt. Die Leiterbahn 4 ist aus Kupfer gefertigt und wurde rückseitig mit einem materialabtragenden Verfahren, insbesondere durch Lasern, von Folie befreit, um einen Zugang für das Ultraschallschweißen zu ermöglichen.

Der flexible Schaltungsträger 3 umfasst mindestens eine Folie und Leiterbahnen 4.

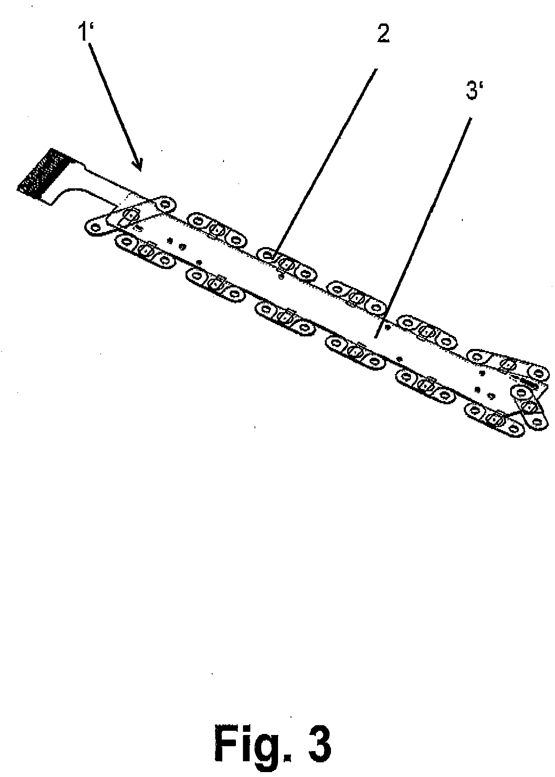

Fig. 3 zeigt eine Anordnung 1' mit mehreren Stromsammelschienen 2 aus Metall, welche einen Verbund mit einem Schaltungsträger 3' mit mehreren Leiterbahnen 4 bildet.

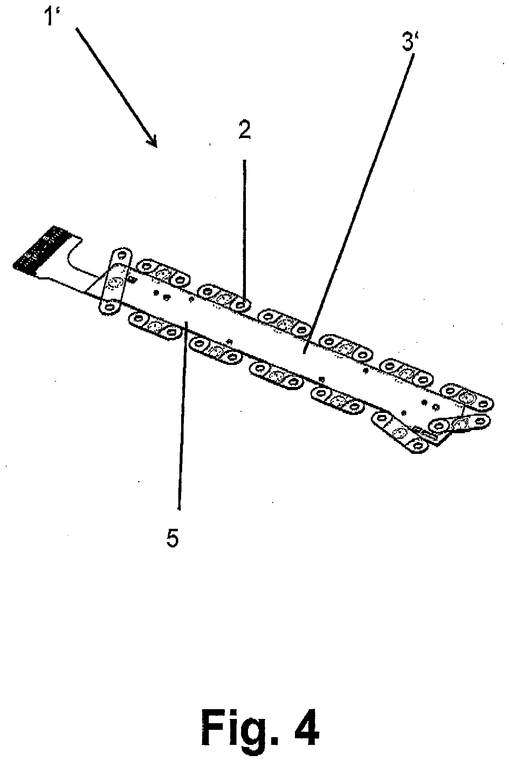

Fig. 4 zeigt die Anordnung 1' gemäß Fig. 3 mit mehreren Stromsammelschienen 2 aus Metall, welche einen Verbund mit einem Schaltungsträger 3' mit mehreren Leiterbahnen 4 bildet. Auf dem flexiblen Schaltungsträger 3' liegt eine Trägerfolie 5 auf.

## Patentansprüche

1. Anordnung (1, 1'), umfassend mindestens eine Stromsammelschiene (2), welche mit mindestens einem flexiblen Schaltungsträger (3, 3') einen Verbund bildet, wobei der flexible Schaltungsträger (3, 3') mindestens eine Leiterbahn (4) aufweist und wobei die Leiterbahn (4) mit der Stromsammelschiene (2) verschweißt ist,
**dadurch gekennzeichnet, dass** die Stromsammelschiene (2) zwischen zwei Schaltungsträgern (3, 3') einlaminiert ist.

2. Anordnung nach Anspruch 1, **dadurch gekennzeichnet, dass** die Leiterbahn (4) mit der Stromsammelschiene (2) ultraschallverschweißt ist.

3. Verwendung einer Anordnung nach einem der voranstehenden Ansprüche zur Bestückung mit elektronischen Bauteilen, welche über Lötstellen mit dem Schaltungsträger (3, 3') kontaktiert sind.

## Claims

1. An assembly (1, 1'), comprising at least one busbar (2), which forms an interconnection with at least one flexible circuit carrier (3, 3'), wherein the flexible circuit carrier (3, 3') comprises at least one strip conductor (4) and wherein the strip conductor (4) is welded to the busbar (2),
**characterised in that** the busbar (2) is laminated between two circuit carriers (3, 3').

2. The assembly according to claim 1, **characterised in that** the strip conductor (4) is ultrasonically welded to the busbar (2).

3. Use of an assembly according to any one of the preceding claims for equipping with electronic components, which are contacted with the circuit carrier (3, 3') via solder joints.

## Revendications

1. Agencement (1, 1') comprenant au moins une barre collectrice de courant (2), qui forme un ensemble avec au moins un support de circuit (3, 3') souple, le support de circuit (3, 3') souple comportant au moins une piste conductrice (4) et la piste conductrice (4) étant soudée avec la barre collectrice de courant (2),
**caractérisé en ce que** la barre collectrice de courant (2) est introduite par laminage entre deux supports de circuit (3, 3').

2. Agencement selon la revendication 1, **caractérisé en ce que** la piste conductrice (4) est soudée aux ultrasons avec la barre collectrice de courant (2).

3. Utilisation d'un agencement selon l'une quelconque des revendications précédentes, pour l'équipement avec des composants électroniques qui sont mis en contact avec le support de circuit (3, 3') par l'intermédiaire de brasures.
